# EUROPEAN PATENT SPECIFICATION

(11) **EP 3 499 144 B1**
(45) Date of publication and mention of the grant of the patent: **30.09.2020**
(21) Application number: 17840830.8
(22) Date of filing: 26.05.2017
(51) Int. Cl.: F24F 13/10, F24F 13/24, B66D 1/34, F16D 7/02

(54) **AIR CONDITIONER HAVING A ROLLER WHEEL MECHANISM**
KLIMAANLAGE MIT ROLLENRADMECHANISMUS
APPAREIL DE CLIMATISATION COMPRENANT UN MÉCANISME DE ROULEMENT

(30) Priority: 15.08.2016 CN 201610673841
(43) Date of publication of application: 19.06.2019
(73) Proprietor: Gree Electric Appliances, Inc. of Zhuhai, Zhuhai, Guangdong 519070 (CN)
(72) Inventor: DU, Hui, Zhuhai City Guangdong 519070 (CN); LEI, Xinjian, Zhuhai City Guangdong 519070 (CN); LI, Ziqi, Zhuhai City Guangdong 519070 (CN)
(74) Representative: Zacco GmbH
(86) International application number: PCT/CN2017/086090
(87) International publication number: WO 2018/032854

(56) References cited:
- WO-A1-2007/080607
- WO-A1-2015/144423
- CN-A- 1 499 105
- CN-A- 106 196 542
- CN-A- 106 196 542
- CN-U- 205 939 609
- CN-U- 205 939 609
- JP-A- H1 123 001
- KR-A- 20010 105 768
- KR-A- 20010 105 768
- KR-A- 20020 002 153
- KR-A- 20020 002 153
- US-A1- 2009 197 719

## Description

### Technical Field

The present disclosure relates to a field of refrigeration, and more particularly to an air conditioner with a roller mechanism.

### Background

An adjustable roller mechanism in the conventional art can be used for a patio machine panel with a grating lift function. The adjustable roller mechanism includes an inner wheel and an outer wheel. The inner circumferential wall of the outer wheel is provided with an outer wheel caliper. The inner wheel is provided with multiple elastic claws, and a grating is hung on an outer wall of the outer wheel through a rope and a fastener. When the grating rises to a specified height and is blocked and can no longer continue to rise, a cable is tightened at this time, the outer wheel bears a large pulling force which is transmitted to the elastic claw through the outer wheel caliper, and this force exceeds the bearing limit of the elastic jaw, which makes the elastic jaw contracted and distorted inwardly. If the inner wheel continues to rotate, the elastic claw will slip on the outer wheel caliper, and the outer wheel will not continue to rotate. On the one hand, the above structure makes the outer wheel less susceptible to damage, and on the other hand, a traction wire is not easily broken. However, such mechanism still has certain deficiencies, specifically the following two points:
First, since the elastic claws may slip on the outer wheel caliper, a large noise is generated, which makes bad use feeling of a user.

Second, since the elastic jaws are often contracted and distorted inwardly and slip on the outer wheel caliper, the probability of fatigue failure of the elastic jaws is increased, thereby shortening the life of the mechanism.

D1 (WO2007/080607A1) disclosesa hub-pulley assembly including a hub adapted to be connected to a rotational member of a motor vehicle and having an axis (A), a pulley adapted to cooperate with a drive belt and driving means arranged between the hub and the pulley. The driving means include bidirectional disengagement means which allow a relative rotation between the hub and the pulley in both directions.

D2(WO2007/080607A1) discloses amultiple bar straightening and cutting system in bar steel rolling line, the multiple bar straightening and cutting system includes a multiple bar straightening device, an input side guide pinch roller, a multiple running bar cutting device, and a rear tilting table having an output side guide pinch roller, the multiple running bar cutting device further comprising a fixed blade and a movable blade having a plurality of hole shapes suitably matching the cross-sectional shapes of the bar steel and the rear tilting table being tilted in the moving direction of a cutter in synchronous with the movement of the cutter of the multiple running bar cutting device.

D3(KR20020002153A)discloses ashutter driving apparatus provided to prevent damage to the guide member, reduce parts count and simplify the buffering structure. The shutter driving apparatus includes upper protrusions protruded from the upper side surfaces of the shutter; lower protrusionsprotruded from the lower side surfaces of the shutter, and which has a diameter smaller than the diameter of the upper protrusion; an integrated guide groovewhere a wide guide groove and a narrow guide groove are formed integrally, so as to simultaneously guide the upper protrusions and the lower protrusions; a roller sliding memberhaving a protrusion an operating shaft of which is fixed to an end of an operating rodwhich is fixed to the rear surface of the shutter; a rotating member where a rollerelastically contacting a sliding preventing protrusion of the roller sliding member is inserted; and a driving motor which is press fit into the rotating member, and drives the roller slide member in a vertical direction.

D4(US2009197719A1) discloses a torsional decoupler, the torsional decoupler includes a hub having a hub surface, the hub surface having a profile, a pulley having a pulley surface, the pulley surface having a profile, a frictional member disposed between the hub surface and the pulley surface, the frictional member frictionally engaging at least one of the pulley surface or the hub surface, and the frictional member transmitting a torque between the hub and the pulley such that a movement occurs between the hub and the pulley.

### Summary

A main objective of the present disclosure is to provide an air conditioner having roller mechanism intended to solve the problem of loud noise.

In some embodiments, the driving shaft may be provided with a accommodating groove for accommodating the friction portion.

In some embodiments, the driving shaft may be provided with a protrusion, and the friction portion may be provided with a limiting groove matching the protrusion.

In some embodiments, the friction portion may extend in a circumferential direction of the driving shaft.

In some embodiments, the friction portion may be annular, and the driving shaft may be provided with an annular accommodating groove for accommodating the friction portion.

In some embodiments, the longitudinal section of the friction portion may be rectangular, circular, elliptical, trapezoidal, V-shaped or triangular.

In some embodiments, an inner diameter of the outer wheel may be smaller than an outer diameter of the friction portion in a free state.

In some embodiments, the friction portion may be made of an elastic material.

In some embodiments, the friction portion may be made of a rubber material.

In some embodiments, an outer wall of the outer wheel may be subjected to a load force G, the driving force of the driving shaft may be N, the frictional force between the driving shaft and the friction portion may be a first frictional force f₁, and the frictional force between the frictional portion and the outer wheel may be a second frictional force f₂, where N>f₁>f₂, when G<f₂, the outer wheel may rotate with the driving shaft, and when G>f₂, the outer wheel may stop rotating.

According to the present invention, an air conditioner is provided. The air conditioner includes a grating; and a roller mechanism, connected to the grating and driving the grating to move.

According to the technical solution of the present disclosure, the roller mechanism includes a friction portion, sandwiched between the driving shaft and the outer wheel, the driving shaft driving the outer wheel to rotate by means of the friction portion. When the roller mechanism is in operation, the driving shaft drives the friction portion to rotate, and the friction portion drives the outer wheel to rotate. When the magnitude of the load force on the outer wheel is greater than the frictional force between the outer wheel and the friction portion, the friction portion rotates relative to the outer wheel. At this time, although the driving shaft rotates, the outer wheel does not rotate. The above structure makes the outer wheel less susceptible to damage. In addition, according to the technical solution of the present embodiment, a ratcheting structure is replaced with a friction structure. On the one hand, the noise of the roller mechanism is reduced, the problem of loud noise of the roller mechanism in the conventional art is solved, and the user experience is improved. On the other hand, the wear of the roller mechanism is reduced, so that the reliability of the roller mechanism is improved, and the life of the roller mechanism is prolonged.

### Brief Description of the Drawings

The accompanying drawings, which constitute a part of this application, are used to provide a further understanding of the present disclosure, and the exemplary embodiments of the present disclosure and the description thereof are used to explain the present disclosure, but do not constitute improper limitations to the present disclosure. In the drawings:
Fig. 1 is a stereogram of a driving shaft of a roller mechanism according to Embodiment 1 of the present disclosure;
Fig. 2 is a structural stereogram of the roller mechanism in Fig. 1; and
Fig. 3 is a longitudinal section structure diagram of the roller mechanism in Fig. 2.
The drawings include the following reference signs:
   10: driving shaft; 11: accommodating groove; 20: outer wheel; 30: friction portion.

### Detailed Description of the Embodiments

It is to be noted that in the case of no conflict, the features in the embodiments and the embodiments in the present application may be combined with each other. The present disclosure is described below with reference to the drawings and in conjunction with the embodiments in detail.

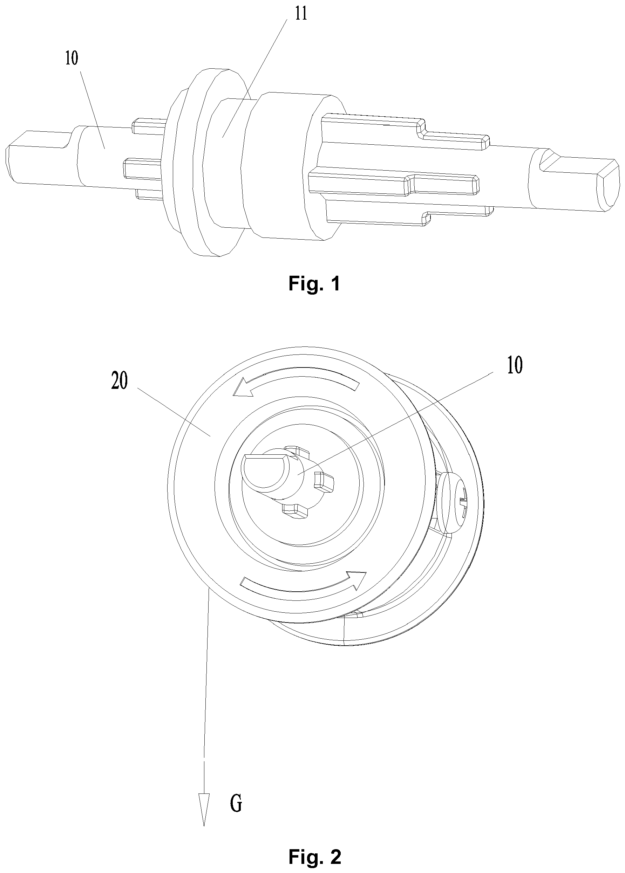

As shown in Fig. 1 to Fig. 3, a roller mechanism in Embodiment 1 includes a driving shaft 10, an outer wheel 20 and a friction portion 30. The outer wheel 20 is provided on the driving shaft 10 in a sleeving manner, the friction portion 30 is sandwiched between the driving shaft 10 and the outer wheel 20, and the driving shaft 10 drives the outer wheel 20 to rotate by means of the friction portion.

According to the technical solution of Embodiment 1, the roller mechanism includes the friction portion 30, the friction portion 30 being sandwiched between the driving shaft 10 and the outer wheel 20, the driving shaft 10 driving the outer wheel 20 to rotate by means of the friction portion 30. When the roller mechanism is in operation, the driving shaft 10 drives the friction portion 30 to rotate, and the friction portion 30 drives the outer wheel 20 to rotate. When the magnitude of the load force on the outer wheel 20 is greater than the frictional force between the outer wheel 20 and the friction portion 30, the friction portion 30 rotates relative to the outer wheel 20. At this time, although the driving shaft 10 rotates, the outer wheel 20 does not rotate. The above structure makes the outer wheel 20 less susceptible to damage. In addition, according to the technical solution of the present embodiment, a ratcheting structure is replaced with a friction structure. On the one hand, the noise of the roller mechanism is reduced, the problem of loud noise of the roller mechanism in the conventional art is solved, and the user experience is improved. On the other hand, the wear of the roller mechanism is reduced, so that the reliability of the roller mechanism is improved, and the life of the roller mechanism is prolonged.

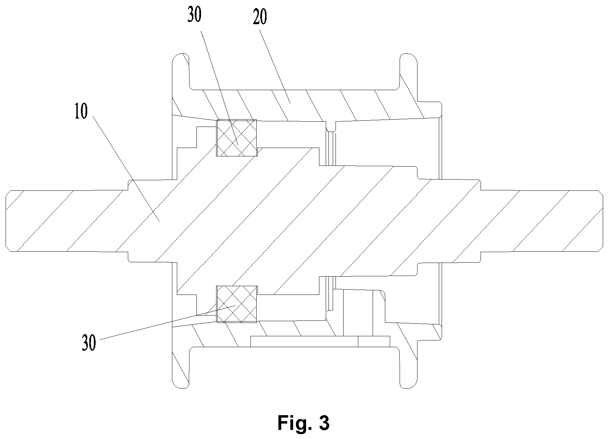

As shown in Fig. 1 and Fig. 3, in Embodiment 1, the driving shaft 10 is provided with a accommodating groove 11 for accommodating the friction portion 30. The above structure enables the friction portion 30 to be always in the operating position without being swayed in the axial direction of the driving shaft 10, thereby ensuring the operational stability of the roller mechanism. Of course, those skilled in the art should know that the accommodating groove for accommodating the friction portion 30 is not necessarily a groove provided on the driving shaft 10, it is also possible to provide two limiting protrusions on the driving shaft 10, and the friction portion 30 is located between the two limiting projections, so that the friction portion 30 does not sway in the axial direction of the driving shaft 10.

As shown in Fig. 3, in Embodiment 1, the friction portion 30 extends in a circumferential direction of the driving shaft. The above structure is simple and easy to install.

As shown in Fig. 3, in Embodiment 1, the friction portion 30 is annular, and the driving shaft 10 is provided with an annular accommodating groove for accommodating the friction portion 30. The above structure is convenient for a worker to install the friction portion, and the friction portion is sleeved in the annular accommodating groove. Moreover, the above structure is convenient for processing and production.

As shown in Fig. 3, in Embodiment 1, the longitudinal section of the friction portion 30 is rectangular, circular, elliptical, trapezoidal, V-shaped or triangular. The specific shape of the longitudinal section of the friction portion 30 may be set according to actual conditions. Of course, those skilled in the art will appreciate that the longitudinal section of the friction portion 30 may also be other shapes than those listed above. Preferably, in the present embodiment, the longitudinal section of the friction portion 30 is rectangular. The above structure allows the friction portion 30 to sufficiently contact the driving shaft 10 and the outer wheel 20 to ensure a predetermined frictional force between the friction portion 30 and the driving shaft 10 and the friction portion 30 and the outer wheel 20. Moreover, the above structure is simple to process and easy to implement.

In Embodiment 1, an inner diameter of the outer wheel 20 is smaller than an outer diameter of the friction portion 30 in a free state. The above structure can ensure a predetermined first frictional force between the friction portion 30 and the driving shaft 10, and a predetermined second frictional force between the friction portion 30 and the outer wheel 20.

The following briefly describes the installation process:
Since the side surface of the above driving shaft 10 has an annular groove, the friction portion 30 can be nested in the annular groove, and then the driving shaft 10 and the friction portion 30 are simultaneously inserted into the outer wheel 20. The friction portion 30 and the annular groove of the drive shaft 10 should be tightly fitted, and the inner diameter of the outer wheel 20 should be slightly smaller than the outer diameter of the friction portion 30 in a natural state. In this way, the friction portion 30 is in a slightly compressed state when the roller mechanism is assembled.

Since the friction coefficient of the friction material is lower, noise is not easy to occur. Therefore, in the present embodiment, the friction portion is made of a rubber material. The rubber material has a small coefficient of friction and produces low noise. Of course, those skilled in the art should know that the material of the friction portion is not limited thereto, and may be made of other elastic materials having a small coefficient of friction.

It is to be noted that since the friction portion 30 adopts a material with elasticity and the action is friction sliding, the sound is obviously smaller than the sound of the ratchet spring in the conventional art, and the fatigue deformation failure of an elastic body in a ratchet mechanism is avoided.

It is to be noted that in the present embodiment, the driving shaft 10 and the outer wheel 20 may be made of a plastic material or other hard materials.

Specifically, in Embodiment 1, an outer wall of the outer wheel 20 is subjected to a load force G, the driving force of the driving shaft 10 is N, the frictional force between the driving shaft 10 and the friction portion 30 is a first frictional force f₁, and the frictional force between the frictional portion and the outer wheel 20 is a second frictional force f₂, where N>f₁>f₂, when G<f₂, the outer wheel 20 rotates with the driving shaft 10, and when G>f₂, the outer wheel 20 stops rotating. The above structure makes it possible for the driving shaft 10 to drive the friction portion 30 to rotate since the driving force N of the driving shaft 10 is larger than the first frictional force f₁ when the roller mechanism is operated. Further, since the load force G is smaller than the second frictional force f₂, the driving shaft 10 can drive the outer wheel 20 to rotate. When the load force G is greater than the second frictional force f₂ (for example, the outer wheel 20 is subjected to a load force N), the friction portion 30 can rotate relative to the outer wheel 20. At this time, although the driving shaft 10 rotates, the outer wheel 20 does not rotate. The above structure makes the outer wheel 20 less susceptible to damage.

The differences between the roller mechanism in Embodiment 2(not shown in the figure) and the roller mechanism in Embodiment 1 are specific structures of the driving shaft 10 and the friction portion 30. Specifically, in Embodiment 2, the driving shaft 10 is provided with a protrusion, and the friction portion 30 is provided with a limiting groove matching the protrusion. The above structure enables the friction portion 30 to be always in the operating position without being swayed in the axial direction of the driving shaft 10, thereby ensuring the operational stability of the roller mechanism.

In the present application, there is also provided an air conditioner (not shown in the figure), the air conditioner according to the present application includes a grating and a roller mechanism. The roller mechanism is connected to the grating and drives the grating to move, wherein the roller mechanism is the roller mechanism provided above. Since the above roller mechanism has an advantage of low noise, the air conditioner having the above roller mechanism also has the above advantage.

Specifically, the grating is connected to the roller mechanism by a sling, one end of the sling is connected to the grating, the other end of the sling is press-fixed to the outer wheel 20 by a screw, and the driving shaft 10 is driven to rotate by a motor. Since the friction portion 30 is in a pressed state in the roller mechanism, there is a frictional force between the inner side of the friction portion 30 and the driving shaft 10, that is, the first frictional force f₁ described above. There is a frictional force between the friction portion 30 and the outer wheel 20, that is, the second frictional force f₂ described above. The load force of the outer wheel 20 is equal to the gravity G of the grating, and the torque of the motor on the driving shaft 10 is N. In the present embodiment, N>f₁>f₂>G should be satisfied.

When the motor drives the driving shaft 10, the driving shaft 10 drives the friction portion 30, the friction portion 30 drives the outer wheel 20 to rotate against the load, and the grating moves up and down accordingly.

In the present embodiment, there are multiple roller mechanisms. On the one hand, the above structure makes the lifting of the grating smoother, and on the other hand, the load force on the sling is reduced, so that the sling is less likely to be broken, and the reliability of the use of the air conditioner is improved.

In the present embodiment, the grating is rectangular, and the multiple roller mechanisms are disposed at top corners of the grating. The above structure further makes the lifting of the grating smoother. In addition, the application of the above roller mechanism can improve the phenomenon that the grating does not appear horizontally during lifting. Specifically, if the grating does not appear horizontal during lifting, when the grating portion at the higher end rises to a final position, it will withstand a main frame of the air conditioner. At this time, the load force applied to the grating portion at the higher end becomes larger, and when the magnitude of the load force reaches a predetermined value (for example, the magnitude of the load force is the torque N of the motor), the driving shaft 10 is still driven to rotate by the motor. Since the frictional force between the friction portion 30 and the outer wheel 20 is small with respect to the load force, relative sliding occurs therebetween. The outer wheel 20 is no longer driven. The roller mechanism in other positions will continue to drive the corresponding point of the grating to rise, so that the leveling of the grating can be achieved.

The above is only the preferred embodiments of the present disclosure, not intended to limit the present disclosure. As will occur to those skilled in the art, the present disclosure is susceptible to various modifications and changes. Any modifications, equivalent replacements, improvements and the like made within the principle of the present disclosure shall fall within the scope of protection of the claims.

## Claims

1. An air conditioner, comprising:
a grating; and
a roller mechanism, connected to the grating and driving the grating to move,
wherein
the roller mechanism is comprising:
a driving shaft (10);
an outer wheel (20), provided on the driving shaft (10) in a sleeving manner; and
a friction portion (30), sandwiched between the driving shaft (10) and the outer wheel (20), the driving shaft (10) driving the outer wheel (20) to rotate by means of the friction portion (30),
while there are a plurality of roller mechanisms,
wherein the grating is rectangular, and the plurality of roller mechanisms are disposed at top corners of the grating.

2. The air conditioner as claimed in claim 1, wherein the driving shaft (10) is provided with an accommodating groove (11) for accommodating the friction portion (30).

3. The air conditioner as claimed in claim 1, wherein the driving shaft (10) is provided with a protrusion, and the friction portion (30) is provided with a limiting groove matching the protrusion.

4. The air conditioner as claimed in claim 1, wherein the friction portion (30) extends in a circumferential direction of the driving shaft (10).

5. The air conditioner as claimed in claim 4, wherein the friction portion (30) is annular, and the driving shaft (10) is provided with an annular accommodating groove for accommodating the friction portion (30).

6. The air conditioner as claimed in claim 4, wherein a longitudinal section of the friction portion (30) is rectangular, circular, elliptical, trapezoidal, V-shaped or triangular.

7. The air conditioner as claimed in claim 1, wherein an inner diameter of the outer wheel (20) is smaller than an outer diameter of the friction portion (30) in a free state.

8. The air conditioner as claimed in claim 1, wherein the friction portion (30) is made of an elastic material.

9. The air conditioner as claimed in claim 1, wherein the friction portion (30) is made of a rubber material.

10. The air conditioner as claimed in any one of claims 1 to 9, wherein an outer wall of the outer wheel (20) is subjected to a load force G, a driving force of the driving shaft (10) is N, a frictional force between the driving shaft (10) and the friction portion (30) is a first frictional force f₁, and a frictional force between the frictional portion (30) and the outer wheel (20) is a second frictional force f₂, where N>f₁>f₂, when G<f₂, the outer wheel (20) rotates with the driving shaft (10), and when G>f₂, the outer wheel (20) stops rotating.

## Patentansprüche

1. Klimaanlage, umfassend:
einen Gitterrost; und
einen mit dem Gitterrost verbundenen Rollenmechanismus, der den Gitterrost zum Bewegen antreibt,
wobei
der Rollenmechanismus umfasst:
eine Antriebswelle (10);
ein Außenrad (20), das auf der Antriebswelle (10) hülsenartig vorgesehen ist; und
einen Reibungsabschnitt (30), der zwischen der Antriebswelle (10) und dem Außenrad (20) liegt, wobei die Antriebswelle (10) mittels des Reibungsabschnitts (30) das Außenrad (20) zum Rotieren antreibt,
während eine Mehrzahl von Rollenmechanismen vorgesehen sind,
wobei der Gitterrost rechteckig ist, und die Mehrzahl von Rollenmechanismen an oberen Ecken des Gitterrostes vorgesehen sind.

2. Klimaanlage nach Anspruch 1, wobei die Antriebswelle (10) mit einer Aufnahmenut (11) zur Aufnahme des Reibungsabschnitts (30) ausgestattet ist.

3. Klimaanlage nach Anspruch 1, wobei die Antriebswelle (10) mit einem Vorsprung versehen ist, und der Reibungsabschnitt (30) mit einer dem Vorsprung entsprechenden Begrenzungsnut versehen ist.

4. Klimaanlage nach Anspruch 1, wobei sich der Reibungsabschnitt (30) in einer Umfangsrichtung der Antriebswelle (10) erstreckt.

5. Klimaanlage nach Anspruch 4, wobei der Reibungsabschnitt (30) ringförmig ist, und die Antriebswelle (10) mit einer ringförmigen Aufnahmenut zur Aufnahme des Reibungsabschnitts (30) ausgestattet ist.

6. Klimaanlage nach Anspruch 4, wobei ein Längsabschnitt des Reibungsabschnitts (30) rechteckig, kreisförmig, elliptisch, trapezförmig, V-förmig oder dreieckig ist.

7. Klimaanlage nach Anspruch 1, wobei ein Innendurchmesser des Außenrads (20) kleiner als ein Außendurchmesser des Reibungsabschnitts (30) in freiem Zustand ist.

8. Klimaanlage nach Anspruch 1, wobei der Reibungsabschnitt (30) aus einem elastischen Material gefertigt ist.

9. Klimaanlage nach Anspruch 1, wobei der Reibungsabschnitt (30) aus einem Gummimaterial gefertigt ist.

10. Klimaanlage nach einem der Ansprüche 1 bis 9, wobei eine Außenwand des Außenrads (20) einer Belastungskraft G unterworfen ist, eine Antriebskraft der Antriebswelle (10) N ist, eine Reibungskraft zwischen der Antriebswelle (10) und dem Reibungsabschnitt (30) eine erste Reibungskraft f₁ ist, und eine Reibungskraft zwischen dem Reibungsabschnitt (30) und dem Außenrad (20) eine zweite Reibungskraft f₂ ist, wobei N>f₁>f₂, wenn G<f₂, das Außenrad (20) mit der Antriebswelle (10) rotiert, und wenn G>f₂, das Außenrad (20) nicht mehr dreht.

## Revendications

1. Climatiseur comprenant :
une grille ; et
un mécanisme à rouleaux, relié à la grille et entraînant la grille à se déplacer,
dans lequel
le mécanisme à rouleaux comprend :
un arbre d'entraînement (10) ;
une roue extérieure (20), disposée sur l'arbre d'entraînement (10) d'une manière emmanchée ; et
une partie de frottement (30), prise en sandwich entre l'arbre d'entraînement (10) et la roue extérieure (20), l'arbre d'entraînement (10) entraînant la roue extérieure (20) à tourner au moyen de la partie de frottement (30),
alors qu'il existe une pluralité de mécanismes à rouleaux,
dans lequel la grille est rectangulaire, et la pluralité de mécanismes à rouleaux sont disposés au niveau des coins supérieurs de la grille.

2. Climatiseur selon la revendication 1, dans lequel l'arbre d'entraînement (10) est pourvu d'une rainure de réception (11) pour recevoir la partie de frottement (30).

3. Climatiseur selon la revendication 1, dans lequel l'arbre d'entraînement (10) est pourvu d'une saillie, et la partie de frottement (30) est pourvue d'une rainure de limitation correspondant à la saillie.

4. Climatiseur selon la revendication 1, dans lequel la partie de frottement (30) s'étend dans une direction circonférentielle de l'arbre d'entraînement (10).

5. Climatiseur selon la revendication 4, dans lequel la partie de frottement (30) est annulaire, et l'arbre d'entraînement (10) est pourvu d'une rainure de réception annulaire pour recevoir la partie de frottement (30).

6. Climatiseur selon la revendication 4, dans lequel une section longitudinale de la partie de frottement (30) est rectangulaire, circulaire, elliptique, trapézoïdale, en forme de V ou triangulaire.

7. Climatiseur selon la revendication 1, dans lequel un diamètre intérieur de la roue extérieure (20) est inférieur à un diamètre extérieur de la partie de frottement (30) dans un état libre.

8. Climatiseur selon la revendication 1, dans lequel la partie de frottement (30) est réalisée d'un matériau élastique.

9. Climatiseur selon la revendication 1, dans lequel la partie de frottement (30) est réalisée d'un matériau de caoutchouc.

10. Climatiseur selon l'une quelconque des revendications 1 à 9, dans lequel une paroi extérieure de la roue extérieure (20) est soumise à une force de charge G, une force d'entraînement de l'arbre d'entraînement (10) est N, une force de frottement entre l'arbre d'entraînement (10) et la partie de frottement (30) est une première force de frottement f₁, et une force de frottement entre la partie de frottement (30) et la roue extérieure (20) est une deuxième force de frottement f₂, où N>f₁>f₂, lorsque G<f₂, la roue extérieure (20) tourne avec l'arbre d'entraînement (10), et lorsque G>f₂, la roue extérieure (20) s'arrête de tourner.
